# EUROPÄISCHE PATENTANMELDUNG

(11) **EP 0 883 275 A2**
(43) Veröffentlichungstag der Anmeldung: **09.12.1998**
(21) Anmeldenummer: 98107338.0
(22) Anmeldetag: 22.04.1998
(51) Int. Cl.: H04M 15/00

(54) **Verfahren zur nutzungsabhängigen Ermittlung von Kosten bei der Benutzung von Kommunikationsverbindungen**

(30) Priorität: 04.06.1997 DE 19723382
(71) Anmelder: ROBERT BOSCH GMBH, 70442 Stuttgart (DE)
(72) Erfinder: Kies, Eduard, 41564 Kaarst (DE); Braun, Heinz-Mathias, 41539 Dormagen (DE)

(57) **Zusammenfassung**

Die Erfindung betrifft ein Verfahren zur nutzungsabhängigen Ermittlung von Kosten bei der Benutzung von Kommunikationsverbindungen, wobei zwischen wenigstens zwei Kommunikationsanlagen eine nutzungsunabhängige Standleitung geschaltet ist.

Es ist vorgesehen, daß jeder aufgebauten Verbindung zwischen den wenigstens zwei Kommunikationsanlagen (12) ein Verbindungsdatensatz zugeordnet wird, der alle eine Verbindung eindeutig definierenden Informationen enthält, und dieser Verbindungsdatensatz nutzungsabhängig ausgewertet wird.

## Beschreibung

Die Erfindung betrifft ein Verfahren zur nutzungsabhängigen Ermittlung von Kosten bei der Benutzung von Kommunikationsverbindungen, wobei zwischen wenigstens zwei Kommunikationsanlagen jeweils nutzungsunabhängige Standleitungen geschaltet sind.

### Stand der Technik

Es ist bekannt, zwischen zu einem Verbund gehörenden Kommunikationsanlagen von Netzbetreibern Standleitungen anzumieten. Diese Standleitungen werden nutzungsunabhängig zur Verfügung gestellt und entsprechend pauschal abgerechnet. Um die hiermit entstehenden Kosten auf die Nutzer der Kommunikationsanlagen des Verbundes umzulegen, ist bekannt, die Kosten pauschal, beispielsweise nach Größe der einer Kommunikationsanlage zugeordneten Nutzer oder anderen geeigneten Kriterien, umzulegen. Die Umlage der Kosten erfolgt jedenfalls nutzungsunabhängig, so daß eine tatsächliche Kostenverteilung anhand einer tatsächlichen Nutzung nicht möglich ist.

### Vorteile der Erfindung

Das erfindungsgemäße Verfahren mit den im Anspruch 1 genannten Merkmalen bietet demgegenüber den Vorteil, daß die für die Verbindungsherstellung entstehenden Gesamtkosten nutzungsabhängig auf die Nutzer der Kommunikationsanlagen umgelegt werden können. Dadurch, daß jeder aufgebauten Verbindung zwischen wenigstens zwei Kommunikationsanlagen ein Verbindungsdatensatz zugeordnet wird, der alle eine Verbindung eindeutig definierenden Informationen enthält, und der Verbindungsdatensatz vorzugsweise einer der Ursprungskommunikationsanlage zugeordneten Auswerteeinheit zugeführt wird, ist es vorteilhaft möglich, anhand des Verbindungsdatensatzes die exakten Parameter der geführten Verbindung für eine weitere Auswertung, insbesondere für eine Ermittlung der mit der beanspruchten Verbindung verbundenen Kosten, auszuwerten. Sehr vorteilhaft können mit dem Verbindungsdatensatz Informationen über einen die Verbindung aufbauenden Nutzer, einen die Verbindung erhaltenden Nutzer sowie insbesondere die die Kosten bestimmenden Verbindungsdauer und Verbindungswege erfaßt werden. Wird der Verbindungsdatensatz kostenstellenabhängig gespeichert, ist eine spätere Umlage der Gesamtkosten nutzungsabhängig möglich.

Vorteilhafte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Gesamtansicht eines Verbundes von Kommunikationsanlagen und
- Figur 2: eine Teilinformation eines Verbindungsdatensatzes.

### Beschreibung des Ausführungsbeispiels

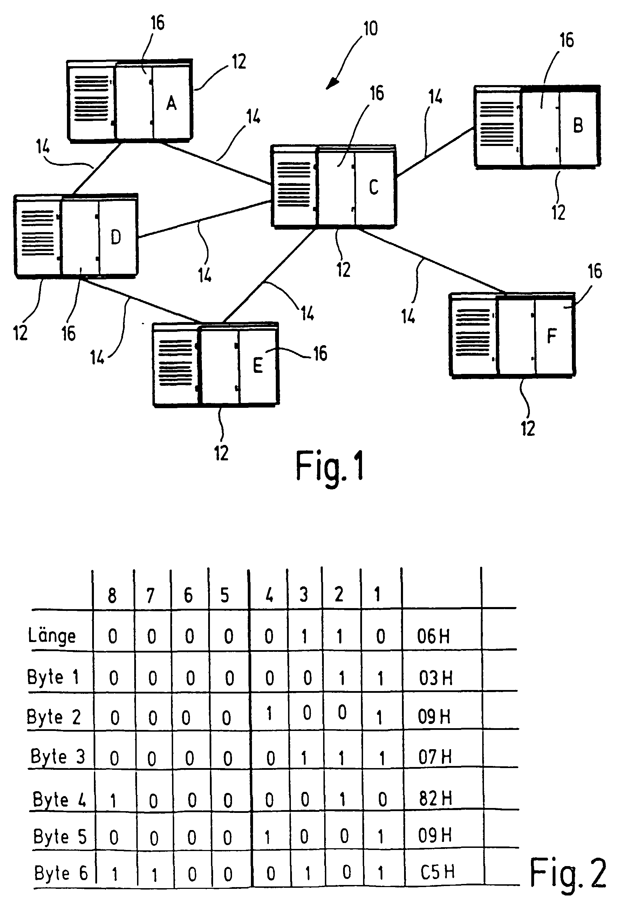

In der Figur 1 ist ein insgesamt mit 10 bezeichneter Verbund einzelner Kommunikationsanlagen 12 dargestellt. Die Kommunikationsanlagen sind jeweils mit A, B, C, D und E gekennzeichnet. Die Kommunikationsanlagen 12 sind untereinander mit Standleitungen 14 verbunden. Hierbei sind entweder lineare Verbindungen, beispielsweise zwischen den Kommunikationsanlagen B und C oder F und C, möglich oder die Kommunikationsanlagen 12 sind untereinander vernetzt, wie beispielsweise die Kommunikationsanlagen A, C, D, E.

Der Verbund 10 der Kommunikationsanlagen 12 kann beispielsweise ein von einem Großunternehmen über mehrere Standorte genutztes Netzwerk sein. Andererseits kann der Verbund 10 beispielsweise auch von mehreren Unternehmen gemeinsam genutzt werden, wobei einzelne Unternehmen jeweils einer Kommunikationsanlage 12 zugeordnet sind.

Jeder der Kommunikationsanlagen 12 sind eine bestimmte Anzahl von Nutzern zugeordnet. Je nach Größe und Struktur können hier jeder Kommunikationsanlage 12 zehn, fünfzehn, zwanzig oder auch mehrere hundert Nutzer zugeordnet sein. Verdeutlichen läßt sich dies, indem die Kommunikationsanlagen 12 als Vermittlungsstellen betrachtet werden, an die über ein internes Verteilungsnetz eine Anzahl von Nebenstellen angeschlossen sind.

Die Kommunikationsanlagen 12 besitzen jeweils eine Auswerteeinheit 16, die entweder in die Kommunikationsanlage 12 integriert ist oder mit dieser über eine Schnittstelle permanent verbunden ist. Die Auswerteeinheit 16, die hier nicht detailliert dargestellt ist, besitzt Mikroprozessoreinheiten, Speichereinheiten und die notwendigen Peripherieeinrichtungen für Auswertungen, beispielsweise Drucker, Bildschirm usw.

Den Auswerteeinheiten 16 wird für jede über wenigstens eine der Standleitungen 14 geführte beziehungsweise aufgebaute Verbindung ein Verbindungsdatensatz übergeben. Dieser Verbindungsdatensatz enthält alle notwendigen Informationen, die die aufgebaute Verbindung eindeutig definiert. Dieser Verbindungsdatensatz kann beispielsweise die Rufnummer des rufenden Teilnehmers, die Rufnummer des gerufenen Teilnehmers, eine intern festgelegte Kostenstelle des rufenden Teilnehmers, eine Identifikationsnummer der genutzten Standleitung 14, die Art der aufgebauten Verbindung, beispielsweise Direktanruf, Rufumleitung, Weiterverbindung usw., Verbindungsdatum, Verbindungsdauer sowie eine Weginformation über die genutzten Standleitungen 14 sein. Anhand dieses Verbindungsdatensatzes ist eine eindeutige Zuordnung einer geführten Verbindung möglich, so daß die insgesamt angefallenen Kosten für das Betreiben der Standleitungen 14 und gegebenenfalls das Betreiben der Auswerteeinheiten 16 nutzerbezogen umgelegt werden können. Somit ist es möglich, die tatsächlich angefallenen Kosten auf die tatsächlichen Nutzer zu verteilen, so daß möglicherweise zu einer ungerechten Verteilung führende Pauschalabrechnungen nicht notwendig sind.

Der Verbindungsdatensatz wird der Kommunikationsanlage 12 übergeben, von der ein Verbindungsaufbau ausgeht. Für Weitervermittlungen, Rufumleitungen oder anderen Makelungen einer bereits aufgebauten Verbindung kann vorgesehen sein, daß der Verbindungsdatensatz entweder dem Teilnehmer der Ursprungskommunikationsanlage 12 oder dem Teilnehmer der makelnden Kommunikationsanlage 12 zugeordnet wird. Somit würde der Nutzer der makelnden Kommunikationsanlage 12 die Kosten oder Teilkosten für diese Verbindung übernehmen.

Die einzelnen Informationen für den Verbindungsdatensatz sind in einfacher Weise über die Kommunikationsanlagen 12 abgreifbar. Nachfolgend soll insbesondere auf die Zurverfügungstellung der Weginformation innerhalb des Verbindungsdatensatzes Bezug genommen werden, da die Weginformation ein wichtiges Kriterium für die tatsächliche Nutzung einer oder mehrerer Standleitungen 14 ist, die dem Nutzer einer Verbindung nicht offensichtlich ist.

Zur Identifizierung des genutzten Verbindungsweges über die Standleitungen 14 ist jeder Kommunikationsanlage 12 eine bestimmte Kennziffer innerhalb des Verbundes 10 zugeordnet. Die Kennziffern der Kommunikationsanlagen 12 können entweder intern innerhalb des Verbundes 10 festgelegt sein, oder es können vom Hersteller der Kommunikationsanlagen 12 vorgegebene Kennziffern benutzt werden. Die Kennziffern sind vorzugsweise alphanummerisch und können entsprechend der Größe der Kommunikationsanlage beziehungsweise der daran angeschlossenen Nebenstellen eine unterschiedliche Stellenanzahl besitzen.

Die Identifikation des Verbindungsweges wird über die Weitergabe der Kennziffern der angewählten beziehungsweise im Transit genutzten Kommunikationsanlagen 12 an die Ursprungskommunikationsanlage 12, das heißt an die Kommunikationsanlage 12, von der die Verbindung ausgeht, zurückgegeben und dort in der Auswerteeinheit 16 als Teilinformation des gesamten Verbindungsdatensatzes gespeichert beziehungsweise weiterverarbeitet.

Nachfolgend wird die Bereitstellung der Weginformation anhand eines konkreten Beispiels detaillierter erläutert.

Die Kommunikationsanlagen 12 besitzen beispielsweise folgende Kennziffern:
Anlage A 114, Anlage B 53, Anlage C 3972, Anlage D 95, Anlage E 68245, Anlage F 37.

Um eine einheitliche Informationslänge zu erhalten, werden die Kennziffern der Kommunikationsanlagen 12 bei ihrer Weitergabe zu der vorhergehenden Kommunikationsanlage 12 innerhalb des Verbindungsweges auf eine Stelligkeit der längsten Kennziffer aufgefüllt. Die Kennziffer der Kommunikationsanlagen 12, deren Stelligkeit kleiner ist als die Stelligkeit der größten Kennziffer einer Kommunikationsanlage 12 innerhalb eines aufgebauten Verbindungsweges, werden mit Initialwerten aufgefüllt.

Baut beispielsweise ein Nutzer der Kommunikationsanlage A eine Verbindung zu einem Nutzer der Kommunikationsanlage F auf, wählt die Kommunikationsanlage 12 der Anlage A den günstigsten Verbindungsweg aus. Der günstigste Verbindungsweg ist nicht zwingend der kürzeste, im genannten Beispiel beispielsweise über die Kommunikationsanlage C zur Kommunikationsanlage F, sondern richtet sich beispielsweise nach der Auslastung der einzelnen Standleitungen 14 zum Zeitpunkt des geplanten Verbindungsaufbaus. So wird in einem konkreten Beispiel davon ausgegangen, daß die Verbindung von der Kommunikationsanlage A zur Kommunikationsanlage F über die Kommunikationsanlagen D, E, C nach F erfolgt. Ist die Verbindung mit der angerufenen Nebenstelle der Kommunikationsanlage F zustande gekommen, wird der Kommunikationsanlage F ein Wegsignal an die Kommunikationsanlage C, von dieser an die Kommunikationsanlage E, von dieser an die Kommunikationsanlage D und von dieser an die Kommunikationsanlage A zurückgegeben. Jede in der Verbindungskette vorhandene Kommunikationsanlage 12 nimmt das Wegsignal der vorhergehenden Kommunikationsanlage auf und ergänzt es um ein eigenes Wegsignal.

Diese Weginformation enthält die Kennziffern der betroffenen Kommunikationsanlagen 12, die gegebenenfalls um die Initialwerte aufgefüllt sind. Im konkreten Beispiel wird diese Weginformation wie folgt gesichert:

Die Kommunikationsanlage C erhält die Weginformation von der Kommunikationsanlage F in Form von deren Kennziffer, also 37. Die Kommunikationsanlage E erhält dann die Weginformation der Kommunikationsanlage C, die aus der Kennziffer der Kommunikationsanlage C und der Kommunikationsanlage F besteht. Da die Kennziffer der Kommunikationsanlage F zweistellig ist und die der Kommunikationsanlage C vierstellig ist, wird die Kennziffer der Kommunikationsanlage F um zwei Initialwerte, beispielsweise -1, aufgefüllt. Die Kommunikationsanlage E erhält also die Weginformation 37-1-1,3972. In analoger Weise erhält dann die Kommunikationsanlage D die Weginformationen der vorhergehenden, in die Verbindung einbezogenen Kommunikationsanlagen. Diese lautet demnach: 37-1-1-1, 3927-1,68245. Da die Kennziffer der Kommunikationsanlage E fünfstellig ist, sind die Kennziffern der vorhergehenden Kommunikationsanlagen C, F mit der entsprechenden Anzahl von Initialwerten -1 auf eine Fünfstelligkeit aufgefüllt. Die Kommunikationsanlage A erhält schließlich die gesamte Weginformation. Diese lautet demnach: 37-1-1-1,3972-1,68245,95-1-1-1. Anhand dieser Weginformation, die als Teilinformation in den Verbindungsdatensatz eingeht, kann eindeutig der Weg der Verbindung über die einzelnen Standleitungen 14 nachvollzogen werden, so daß eine Aufteilung der Kosten entsprechend der weiteren Informationen des Verbindungsdatensatzes, wie beispielsweise Verbindungsdauer, Verbindungsdatum, Kostenstelle usw., erfolgen kann.

Anhand der in Figur 2 dargestellten Tabelle soll das Weitergeben dieser Weginformation über die Standleitungen 14 verdeutlicht werden. Die Weginformationen können als eine Byte-Folge verschickt werden, die die einzelnen Informationen verschlüsselt, in einer entsprechenden hexadezimalen Kodierung verpackt, enthält. Der Einfachheit halber wird für die nachfolgend erläuterte Weginformation eine Verbindung zwischen der Kommunikationsanlage A nach C über die Kommunikationsanlage D angenommen. Die Kommunikationsanlage C besitzt die Kennziffer 3972 und die Kommunikationsanlage D die Kennziffer 95.

Für die Übermittlung der Weginformationen sind bestimmte Vorschriften festgelegt. Diese betreffen, daß in einer ersten Zeile der Byte-Folge die Gesamtlänge der Weginformation übermittelt wird. Im gezeigten Beispiel beträgt die Gesamtlänge sechs, die sich aus den vier Stellen der Kennziffer der Kommunikationsanlage C und den zwei Stellen der Kennziffer der Kommunikationsanlage D zusammensetzt. Nachfolgend werden in einzelnen Byte-Folgen die Kennziffern der Kommunikationsanlage übergeben, wobei -wie bereits erläutert- beginnend mit der letzten Kommunikationsanlage 12 in dem Verbindungsweg die vorliegenden immer ihre Kennziffern hinzufügen. Im Beispiel wird also zunächst die Kennziffer der Kommunikationsanlage C übermittelt. Die einzelnen Stellen der Kennziffern werden jeweils als einzelnes Byte übermittelt, wobei hier die bits 1 bis 4 des jeweiligen Bytes genutzt werden. Im Beispiel wird im Byte 1 die 3, im Byte 2 die 9, im Byte 3 die 7 und im Byte 4 die 2 für die Kennziffer 3972 übermittelt. Da nach der 2 die Kennziffer der Kommunikationsanlage 12 abgeschlossen ist, wird in dem der letzten Ziffer entsprechenden Byte, hier also dem Byte 4, das bit 8 belegt, so daß für eine nachfolgende Auswertung klar ist, daß hier die Kennziffer einer Kommunikationsanlage 12 endet. Dem schließt sich die Kennziffer der Kommunikationsanlage D in analoger Form an. Im Byte 5 ist die 9 und im Byte 6 die 5 der Kommunikationsanlage D in die Weginformation aufgenommen. Da die Kommunikationsanlage D eine zweistellige Kennziffer hat, wird hier im Byte 6 das bit 8 belegt, womit klar ist, daß die Weginformation der Kommunikationsanlage D beendet ist.

Das Setzen des Überlauf-Flags, also des bits 7, dient dazu, die Länge einer Weginformation auf ein notwendiges oder wünschenswertes Maß zu begrenzen. Ist beispielsweise festgelegt, daß die gesamte Weginformation maximal 10 oder 20 Bytes aufweisen soll, wird mit Erreichen des jeweils letzten Bytes das bit 7 als Überlauf-Flag gesetzt, so daß weitere Informationen nicht mehr hinzugefügt werden können. Hierdurch wird es möglich, in den einzelnen Auswerteeinheiten 16 der Kommunikationsanlage 12 den benötigten Speicherplatz zu begrenzen.

Das bit 7 im letzten Byte wird nur dann gesetzt, wenn die Weginformation unvollständig ist. Wird die Weginformation vollständig übertragen, so ist das bit 7 im letzten Byte immer 0. Der Hinweis, daß die gesamte Weginformation übertragen ist, wird aus dem ersten Byte "Länge" ermittelt.

## Patentansprüche

1. Verfahren zur nutzungsabhängigen Ermittlung von Kosten bei der Benutzung von Kommunikationsverbindungen, wobei zwischen wenigstens zwei Kommunikationsanlagen eine nutzungsunabhängige Standleitung geschaltet ist, **dadurch gekennzeichnet**, daß jeder aufgebauten Verbindung zwischen den wenigstens zwei Kommunikationsanlagen (12) ein Verbindungsdatensatz zugeordnet wird, der alle eine Verbindung eindeutig definierenden Informationen enthält, und dieser Verbindungsdatensatz nutzungsabhängig ausgewertet wird.

2. Verfahren nach Anspruch 1, **dadurch gekennzeichnet**, daß der Verbindungsdatensatz einer der Ursprungs-Kommunikationsanlage (12) der Verbindung zugeordneten Auswerteeinheit (16) zugeführt wird.

3. Verfahren nach einem der vorhergehenden Ansprüche, **dadurch gekennzeichnet**, daß die Auswerteeinheit (16) mit den Kommunikationsanlagen (12) über eine Schnittstelle permanent verbunden ist.

4. Verfahren nach einem der vorhergehenden Ansprüche, **dadurch gekennzeichnet**, daß der Verbindungsdatensatz Nutzerinformationen und Weginformationen enthält.

5. Verfahren nach einem der vorhergehenden Ansprüche, **dadurch gekennzeichnet**, daß für die Ermittlung der Weginformation den einzelnen Kommunikationsanlagen (12) eines Verbundes (10) Kennziffern zugeordnet werden, die der Ursprungs-Kommunikationsanlage (12) der Verbindung übermittelt werden.

6. Verfahren nach einem der vorhergehenden Ansprüche, **dadurch gekennzeichnet**, daß bei einer Verbindung über mehrere Kommunikationsanlagen (12) die Kennziffern aller genutzten Kommunikationsanlagen (12) der Verbindung der Ursprungs-Kommunikationsanlage (12) in umgekehrter Reihenfolge ihrer Einbindung in die Verbindung übermittelt werden.

7. Verfahren nach einem der vorhergehenden Ansprüche, **dadurch gekennzeichnet**, daß die Kennziffern alphanummerisch sind.

8. Verfahren nach einem der vorhergehenden Ansprüche, **dadurch gekennzeichnet**, daß die Kennziffern von Kommunikationsanlagen (12) innerhalb einer Verbindung mit unterschiedlicher Stelligkeit auf die Kennziffer mit der höchsten Stelligkeit mit Initialwerten aufgefüllt werden.

9. Verfahren nach einem der vorhergehenden Ansprüche, **dadurch gekennzeichnet**, daß die Weginformation als Byte-Folge übermittelt wird.

10. Verfahren nach einem der vorhergehenden Ansprüche, **dadurch gekennzeichnet**, daß die Kennziffer jeder Kommunikationsanlage (12) in den Bits 1 bis 4 einer Byte-Folge codiert wird.

11. Verfahren nach einem der vorhergehenden Ansprüche, **dadurch gekennzeichnet**, daß bei der letzten Stelle einer Kennziffer ein Bit 8 als Schlußsignal für eine Kommunikationsanlage (12) gesetzt wird.

12. Verfahren nach einem der vorhergehenden Ansprüche, **dadurch gekennzeichnet**, daß bei der letzten Stelle einer Kennziffer der letzten Kommunikationsanlage (12) eines Verbindungsweges ein Bit 7 gesetzt wird, wenn eine unvollständige Weginformation übertragen wird.
